# EUROPÄISCHE PATENTSCHRIFT

(11) **EP 1 881 920 B1**
(45) Veröffentlichungstag und Bekanntmachung des Hinweises auf die Patenterteilung: **08.12.2010**
(21) Anmeldenummer: 06743243.5
(22) Anmeldetag: 05.04.2006
(51) Int. Cl.: B60T 8/40

(54) **BREMSREGELSYSTEM FÜR FAHRZEUGE**
BRAKE CONTROL SYSTEM FOR VEHICLES
SYSTEME DE REGULATION DU FREINAGE POUR VEHICULES

(30) Priorität: 06.05.2005 DE 102005021126
(43) Veröffentlichungstag der Anmeldung: 30.01.2008
(73) Patentinhaber: ROBERT BOSCH GMBH, 70442 Stuttgart (DE)
(72) Erfinder: SCHAEFER, Ernst-Dieter, 74336 Brackenheim (DE); ZIMMERMANN, Peter, 74360 Ilsfeld (DE)
(86) Internationale Anmeldenummer: PCT/EP2006/061323
(87) Internationale Veröffentlichungsnummer: WO 2006/120089

(56) Entgegenhaltungen:
- WO-A-99/44873
- WO-A-2004/067344
- GB-A- 2 272 031
- US-A- 3 601 452
- US-A- 3 645 584
- US-A- 4 875 741

## Beschreibung

Die vorliegende Erfindung betrifft ein Bremsregelsystem für Fahrzeuge. Bremsregelsysteme für Fahrzeuge sind aus dem Stand der Technik in unterschiedlichen Ausgestaltungen bekannt. Bekannte Bremsregelsysteme sind beispielsweise ABS-Systeme, ESP-Systeme, TCS-Systeme (TCS = Traktion Control System) oder APB-Systeme (APB = Automatische Park-Brems-System). Um die Fahrsicherheit zu erhöhen, werden derartige Systeme in jüngster Zeit verstärkt in Fahrzeugen eingesetzt. Hierdurch erhöhen sich jedoch die Kosten sowie das Gewicht der Fahrzeuge. Darüber hinaus benötigen derartige Bremsregelsysteme einen gewissen Bauraum, welcher u.U. nur in begrenztem Umfang vorhanden ist. Weiterhin werden derartige Bremsregelsysteme in jüngster Zeit verstärkt in Mittelklassewagen und Kleinwagen eingesetzt, wodurch sich jedoch der Preis derartiger Fahrzeuge erhöht.

Die US 3,645,584 A offenbart in Figur 5 ein Bremsregelsystem für Fahrzeuge nach den Merkmalen des Oberbegriffs des Anspruchs 1. Dieses weist zwei voneinander getrennte Bremskreise auf, in denen jeweils ein Pumpenelement Fluid weg von den Radbremsen und zurück in den zugeordneten Bremskreis fördert. Insgesamt sind hier demnach zwei Pumpenelemente eingesetzt, was eine hohe Anzahl an Bauteilen sowie einen erhöhten Aufwand an Montage, Bauraum und Kosten verursacht.

Aus der WO 2004/067344 A sind ferner Bremsregelsysteme für Fahrzeuge bekannt, die jeweils mit genau einem Pumpenelement ausgestattet sind. Diese Pumpenelemente sind jeweils mit einer einzigen Saugleitung und mit einer einzigen Druckleitung mit beiden vorhandenen Bremskreisen hydraulisch verbunden. Betriebsstörungen in einem der Bremskreise können deshalb die Funktionstüchtigkeit des gesamten Bremsregelsystems gefährden.

Ferner weisen die GB 2 272 031 A sowie die US 4 875 741 A Pumpenelemente mit einem Stufenkolben als vorbekannt nach. Allerdings sind hier die von den Stufenkolben begrenzten beiden Druckräume mit ihrer Saugleitung und ihrer Druckleitung an jeweils den selben Bremskreis angeschlossen, so dass für die beiden Bremskreise des bekannten Bremsregelsystems aufwändiger Weise mehrere Pumpenelemente notwendig sind.

### Vorteile der Erfindung

Das erfindungsgemäße Bremsregelsystem mit den Merkmalen des Patentanspruchs 1 weist demgegenüber den Vorteil auf, dass es kostengünstig herstellbar ist und eine geringe Bauteileanzahl aufweist. Ferner kann das Gewicht des Bremsregelsystems sowie der notwendige Bauraum reduziert werden. Dies wird erfindungsgemäß dadurch erreicht, dass für beide Bremskreise des Bremsregelsystems gemeinsam genau ein Pumpenelement vorgesehen ist. Das Pumpenelement weist einen Stufenkolben auf, der einen ersten Druckraum und einen demgegenüber abgedichteten zweiten Druckraum begrenzt. Jeder Druckraum ist mittels jeweils einer Saugleitung und einer Druckleitung mit einem der beiden vorhandenen Bremskreise verbunden. Diese Bremskreise sind dadurch hydraulisch voneinander getrennt. Mit anderen Worten fördert genau ein Pumpenelement Fluid aus einer ersten Saugleitung in eine erste Druckleitung und aus einer zweiten Saugleitung in eine zweite Druckleitung. Im Unterschied zum Stand der Technik, bei dem zwei oder mehr Pumpenelemente notwendig sind, wird erfindungsgemäß nur genau ein einziges Pumpenelement benötigt.

Die Unteransprüche zeigen bevorzugte Weiterbildungen der Erfindung.

Vorzugsweise weist der Kolben des Pumpenelements eine erste Druckfläche zur Druckerhöhung in einem ersten Druckraum und eine zweite Druckfläche zur Druckerhöhung in einem zweiten Druckraum auf. Um dabei eine gleiche Förderhöhe aufzuweisen, ist eine Größe der ersten Fläche vorzugsweise gleich einer Größe der zweiten Druckfläche.

Gemäß einer weiteren bevorzugten Ausgestaltung der Erfindung wird der Kolben des Pumpenelements mittels eines Excenters angetrieben.

Vorzugsweise erfolgt eine Rückstellung des Kolbens mittels eines Rückstellelements, welches im ersten und/oder im zweiten Druckraum angeordnet ist.

Vorzugsweise fördert das einzige Pumpenelement gleichzeitig Fluid in die beiden Druckleitungen. Dadurch ist eine besonders kurze Betriebsdauer des Pumpenelements gewährleistet.

Um ein unerwünschtes Rückströmen von Fluid zu vermeiden, sind vorzugsweise in der ersten und zweiten Saugleitung und in der ersten und zweiten Druckleitung jeweils Rückschlagventile angeordnet.

Das erfindungsgemäße Brems-Regelsystem kann in einem ABS-System, ESP-System oder TCS-System verwendet werden.

### Zeichnung

Nachfolgend werden unter Bezugnahme auf die Zeichnung bevorzugte Ausführungsbeispiele der Erfindung im Detail beschrieben. In der Zeichnung ist:
- Figur 1: eine schematische Ansicht eines ABS-Regelsystems gemäß einem ersten Ausführungsbeispiel der vorliegenden Erfindung,
- Figur 2: eine schematische Schnittansicht eines in Figur 1 verwendeten Pumpenelements,
- Figur 3: eine schematische Ansicht eines Bremsregelsystems gemäß einem zweiten Ausführungsbeispiel der vorliegenden Erfindung, und
- Figur 4: eine schematische Ansicht eines Bremsregelsystems gemäß einem dritten Ausführungsbeispiel der vorliegenden Erfindung.

### Beschreibung der Ausführungsbeispiele

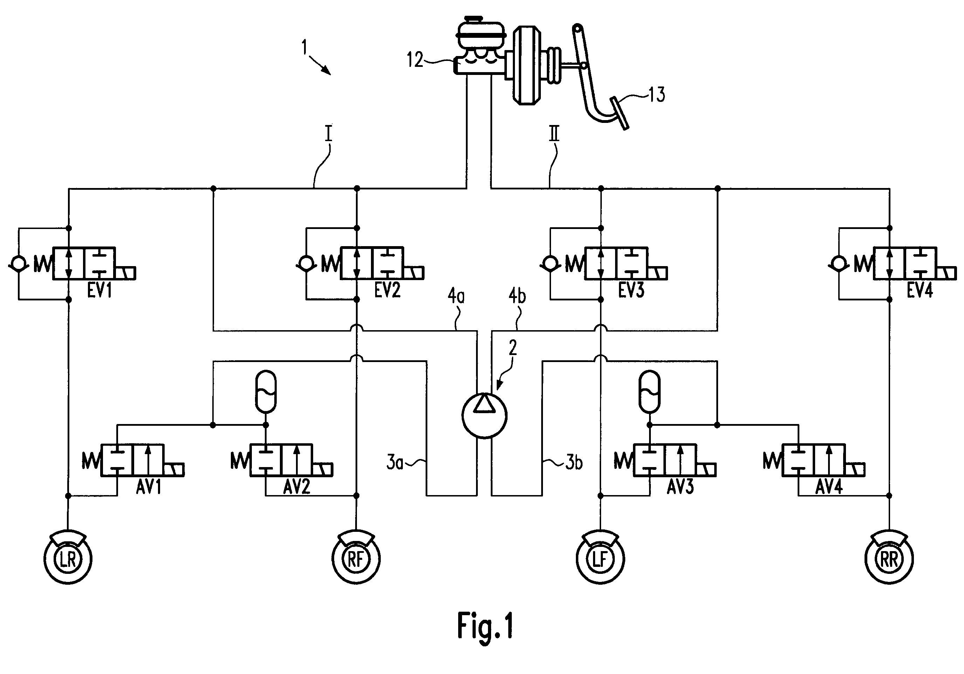

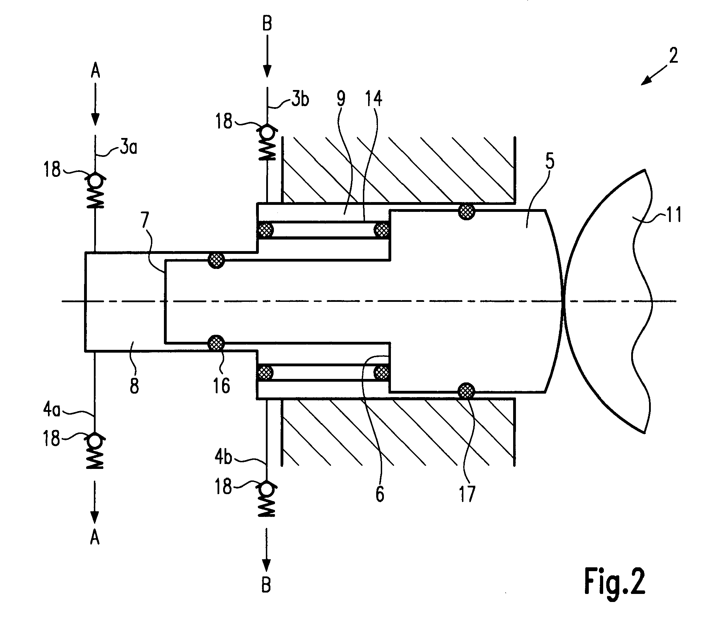

Nachfolgend wird unter Bezugnahme auf die Figuren 1 und 2 ein ABS-Regelsystem 1 gemäß einem ersten Ausführungsbeispiel der Erfindung beschrieben. Das erfindungsgemäße ABS-Regelsystem umfasst einen ersten Bremskreis I und einen zweiten Bremskreis II, die in einer X-Bremskreisanordnung angeordnet sind. Der erste Bremskreis I umfasst eine linke hintere Radbremse LR und eine rechte vordere Radbremse RF. Der zweite Bremskreis II umfasst eine linke vordere Radbremse LF und eine rechte hintere Radbremse RR. Jeder der vier Radbremsen LR, RF, LF und RR ist jeweils ein Einlassventil EV1, EV2, EV3 bzw. EV4 und ein Auslassventil AV1, AV2, AV3 bzw. AV4 zugeordnet. Die Einlassventile sind mit einem Hauptbremszylinder 12 verbunden, welcher mittels eines Bremspedals 13 betätigbar ist. In diesem Ausführungsbeispiel sind die Einlassventile und die Auslassventile jeweils Magnetventile. Ferner ist an den Einlassventilen ein Bypass in Form eines Rückschlagventils vorgesehen.

Die Auslassventile sind für einen Druckabbau an den Radbremsen vorgesehen. Die Auslassventile AV1 und AV2 führen dabei zu einer ersten Saugleitung 3a und die Auslassventile AV3 und AV4 führen zu einer zweiten Saugleitung 3b. Das erfindungsgemäße ABS-Regelsystem umfasst ferner genau ein Pumpenelement 2, welches mit den Saugleitungen 3a und 3b verbunden ist. Weiterhin ist das Pumpenelement 2 mit einer ersten Druckleitung 4a und einer zweiten Druckleitung 4b verbunden. Die Saugleitungen 3a und 3b sind separat zu dem einzigen Pumpenelement 2 des Regelsystems geführt und das durch die erste Saugleitung 3a angesaugte Fluid wird in die erste Druckleitung 4a gefördert und das durch die zweite Saugleitung 3b angesaugte Fluid wird in die zweite Druckleitung 4b gefördert. Das Pumpenelement 2 ist dabei derart aufgebaut, dass es die Fluidförderung separat für jeden Bremskreis ermöglicht. Hierdurch wird verhindert, dass Fluid aus dem ersten Bremskreis I in den zweiten Bremskreis II gelangt bzw. umgekehrt.

Das Pumpenelement 2 ist im Detail in Fig. 2 dargestellt. Wie aus Fig. 2 ersichtlich ist, ist das Pumpenelement 2 eine Kolbenpumpe mit einem Kolben 5, welcher mittels eines Excenters 11 angetrieben wird. Der Kolben 5 ist als Stufenkolben ausgebildet und weist eine erste Druckfläche 6 und eine zweite Druckfläche 7 auf. Um eine gleichmäßige Förderung in beiden Bremskreisen einer diagonal aufgeteilten Bremsanlage zu ermöglichen, sind die Flächen der beiden Druckflächen 6 und 7 gleich groß. Um eine gleichmäßige Förderung in beiden Bremskreisen einer auf Vorderachse und Hinterachse aufgeteilten Bremsanlage zu ermöglichen, können die beiden Flächen der beiden Druckflächen 6 und 7 jeweils zueinander auch unterschiedlich groß ausgelegt werden.
Die erste Saugleitung 3a führt in einen ersten Druckraum 8 und die zweite Saugleitung 3b führt in einen zweiten Druckraum 9. Der erste und der zweite Druckraum 8 und 9 sind dabei derart ausgelegt, dass das Volumen der beiden Druckräume gleich groß ist. Wie in Fig. 2 gezeigt, ist die erste Druckleitung 4a mit dem ersten Druckraum 8 und die zweite Druckleitung 4b mit dem zweiten Druckraum 9 verbunden. Ein Dichtelement 16 dichtet den ersten Druckraum 8 gegenüber dem zweiten Druckraum 9 und ein Dichtelement 17 dichtet den zweiten Druckraum 9 gegenüber dem Excenterraum ab.

Erfindungsgemäß ist somit lediglich ein Pumpenelement 2 vorgesehen, welches eine getrennte Rückförderung von Fluid im ersten Bremskreis I über die Leitungen 3a und 4a und im zweiten Bremskreis II über die Leitungen 3b und 4b ermöglicht. Um einen Fluidrückfluss in den Leitungen zu verhindern, sind in jeder Saugleitung 3a, 3b und in jeder Druckleitung 4a, 4b jeweils ein Rückschlagventil 18 angeordnet. Die Rückschlagventile 18 können integral in einem Gehäuse des Pumpenelements 2 angeordnet sein. Dadurch kann ein besonders kompakter Aufbau des Pumpenelements 2 ermöglicht werden. Zur Rückstellung des Kolbens 5 ist im zweiten Druckraum 9 ein Federelement 14 in Form einer Spiralfeder vorgesehen. Die Strömungsrichtung in den Leitungen ist in Figur 2 mittels der Pfeile A bzw. B angedeutet.

Erfindungsgemäß ist es somit möglich, lediglich ein einziges Pumpenelement 2 im Leitungsplan des ABS-Regelsystems vorzusehen. Hierdurch können die Kosten, die Baugröße und das Gewicht des Regelsystems reduziert werden. Das einzige Pumpenelement 2 ist dabei derart ausgelegt, dass es mit getrennten Saugleitungen 3a, 3b und getrennten Druckleitungen 4a, 4b verbindbar ist. Ein notwendiger Regeleingriff während des Bremsvorgangs kann dadurch ohne Beeinträchtigungen durchgeführt werden. Hierbei können problemlos einzelne Radbremsen oder beliebige Kombinationen von Radbremsen geregelt werden.

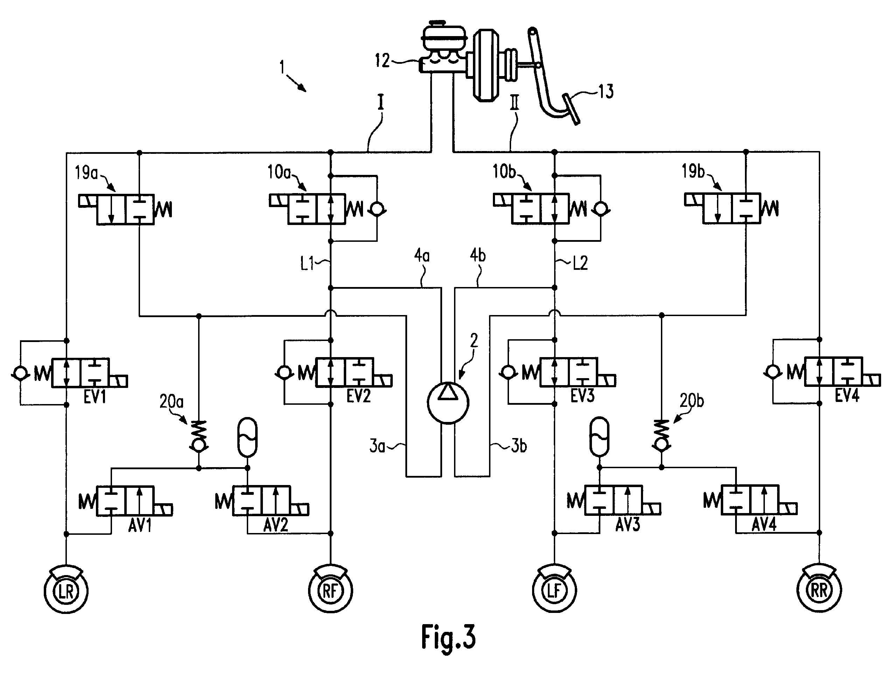

Nachfolgend wird unter Bezugnahme auf Figur 3 ein Regelsystem gemäß eines zweiten Ausführungsbeispiels der Erfindung beschrieben. Das in Figur 3 gezeigte Regelsystem ist ein TCS-System zur Regelung der Traktion. In diesem Ausführungsbeispiel sind gleiche bzw. funktional gleiche Bauteile mit den gleichen Bezugszeichen wie im vorhergehenden Ausführungsbeispiel bezeichnet.

Wie aus Figur 3 ersichtlich ist, umfasst das TCS-System ebenfalls nur genau ein Pumpenelement 2. Das Pumpenelement 2 ist gleich wie im ersten Ausführungsbeispiel aufgebaut und über die Saugleitungen 3a und 3b mit den Auslassventilen AV1, AV2 des ersten Bremskreises I bzw. den Auslassventilen AV3, AV4 des zweiten Bremskreises II verbunden. Die vom Pumpenelement abgehende erste Druckleitung 4a ist mit einem Leitungsabschnitt L1 des ersten Bremskreises I verbunden, der zwischen einem Umschaltventil 10a und dem Einlassventil EV2 für die rechte vordere Radbremse RF liegt. Die zweite Druckleitung 4b ist mit einem Leitungsabschnitt L2 verbunden, welcher zwischen einem zweiten Umschaltventil 10b und dem Einlassventil EV3 liegt. Die Einlassventile EV2 und EV3 sind für die Druckversorgung der Radbremsen an den Vorderrädern verantwortlich, so dass über die Einlassventile EV2, EV3 und die Umschaltventile 10a, 10b eine Traktionskontrolle bei einem Fahrzeug mit Vorderradantrieb möglich ist. Ferner sind Ansaugventile 19a bzw. 19b im ersten bzw. zweiten Bremskreis in bekannter Weise angeordnet. Darüber hinaus sind Rückschlagventile 20a bzw. 20b im ersten Bremskreis I bzw. zweiten Bremskreis II nach den Auslassventilen angeordnet.

Somit weist das TCS-Regelsystem des zweiten Ausführungsbeispiels ebenfalls einen einfachen und kostengünstigen Aufbau bei geringem Gewicht und reduzierter Baugröße auf.

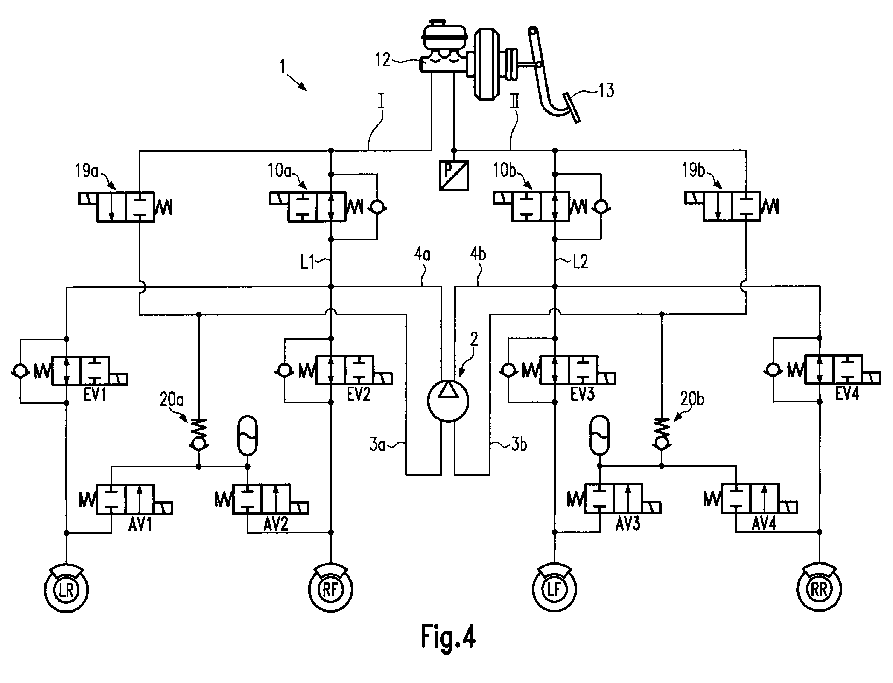

Nachfolgend wird unter Bezugnahme auf Figur 4 ein Regelsystem gemäß einem dritten Ausführungsbeispiel der Erfindung beschrieben, wobei gleiche bzw. funktional gleiche Teile wieder mit den gleichen Bezugszeichen wie in den vorhergehenden Ausführungsbeispielen bezeichnet sind. Das in Figur 4 gezeigte Regelsystem ist ein ESP-System.

Wie die vorhergehenden Steuersysteme, weist das ESP-System des dritten Ausführungsbeispiels ebenfalls genau nur ein Pumpenelement 2 auf. Das Pumpenelement 2 ist wieder wie in Figur 2 aufgebaut und ermöglicht eine separate Förderung im ersten bzw. zweiten Bremskreis. Das dritte Ausführungsbeispiel entspricht dem Aufbau im Wesentlichen dem des zweiten Ausführungsbeispiels, wobei im Unterschied dazu die erste Druckleitung 4a zusätzlich noch mit dem ersten Einlassventil EV1 verbunden und die zweite Druckleitung 4b mit zusätzlich noch dem vierten Einlassventil EV4 verbunden ist, um die ESP-Regelfunktionen an allen vier Radbremsen ausführen zu können. Ansonsten entspricht dieses Ausführungsbeispiel den vorhergehenden Ausführungsbeispielen, so dass auf die dort gegebene Beschreibung verwiesen werden kann.

## Patentansprüche

1. Bremsregelsystem für Fahrzeuge, umfassend einen ersten Bremskreis (I), einen zweiten Bremskreis (II), wobei im ersten Bremskreis (I) und im zweiten Bremskreis (II) jeweils mindestens eine Radbremse (LR, RF, LF, RR) angeordnet ist und wobei jeder Radbremse ein Einlassventil (EV1, EV2, EV3, EV4) und ein Auslassventil (AV1, AV2, AV3, AV4) zugeordnet ist, **dadurch gekennzeichnet.**
**dass** genau ein Pumpenelement (2) vorgesehen ist, das einen Stufenkolben (5) aufweist, der einen ersten Druckraum (8) und einen demgegenüber abgedichteten zweiten Druckraum (9) begrenzt,
wobei der erste Druckraum (8) mittels einer ersten Saugleitung (3a) und mittels einer ersten Druckleitung (4a) mit dem ersten Bremskreis (I) verbunden ist und wobei der zweite Druckraum (9) mittels einer zweiten Saugleitung (3b) und mittels einer zweiten Druckleitung (4b) mit dem zweiten Bremskreis (II) verbunden ist.

2. Bremsregelsystem nach Anspruch 31, **dadurch gekennzeichnet, dass** der Kolben (5) eine erste Druckfläche (6) zur Druckerhöhung im ersten Druckraum (8) und eine zweite Druckfläche (7) zur Druckerhöhung im zweiten Druckraum (9) aufweist.

3. Bremsregelsystem nach Anspruch 2, **dadurch gekennzeichnet, dass** eine Größe der ersten Druckfläche (6) gleich einer Größe der zweiten Druckfläche (7) ist.

4. Bremsregelsystem nach einem der Ansprüche 1 bis 3, **dadurch gekennzeichnet, dass** ein Volumen des ersten Druckraums (8) gleich einem Volumen des zweiten Druckraums (9) ist.

5. Bremsregelsystem nach einem der Ansprüche 1 bis 4, **gekennzeichnet durch** einen Excenter (11) für den Antrieb des Kolbens (5).

6. Bremsregelsystem nach einem der vorhergehenden Ansprüche, **gekennzeichnet durch** ein Rückstellelement (14), um den Kolben (5) in eine Ausgangsposition zurückzustellen.

7. Bremsregelsystem nach einem der vorhergehenden Ansprüche, **dadurch gekennzeichnet, dass** das Pumpenelement (2) Fluid gleichzeitig in die erste Druckleitung (4a) und die zweite Druckleitung (4b) fördert.

8. Bremsregelsystem nach einem der vorhergehenden Ansprüche, **dadurch gekennzeichnet, dass** in der ersten und zweiten Saugleitung (3a, 3b) und der ersten und zweiten Druckleitung (4a, 4b) jeweils ein Rückschlagventil (18) angeordnet ist.

9. Bremsregelsystem nach einem der vorhergehenden Ansprüche, **dadurch gekennzeichnet, dass** das Regelsystem ein ABS-System und/oder ein TCS-System und/oder ein ESP-System und/oder ein APB-System umfasst.

## Claims

1. Brake control system for vehicles, comprising a first brake circuit (I), and a second brake circuit (II), at least one wheel brake (LR, RF, LF, RR) being arranged in each case in the first brake circuit (I) and in the second brake circuit (II), and each wheel brake being assigned an inlet valve (EV1, EV2, EV3, EV4) and an outlet valve (AV1, AV2, AV3, AV4, **characterized in that** exactly one pump element (2) is provided, which has a stepped piston (5) which delimits a first pressure space (8) and a second pressure space (9) sealed off with respect to the latter, the first pressure space (8) being connected to the first brake circuit (I) by means of a first suction line (3a) and by means of a first pressure line (4a), and the second pressure space (9) being connected to the second brake circuit (II) by means of a second suction line (3b) and by means of a second pressure line (4b).

2. Brake control system according to Claim 1, **characterized in that** the piston (5) has a first pressure face (6) for increasing the pressure in the first pressure space (8) and a second pressure face (7) for increasing the pressure in the pressure space (9).

3. Brake control system according to Claim 2, **characterized in that** a size of the first pressure face (6) is equal to a size of the second pressure face (7).

4. Brake control system according to one of Claims 1 to 3, **characterized in that** a volume of the first pressure space (8) is equal to a volume of the second pressure space (9).

5. Brake control system according to one of Claims 1 to 4, **characterized by** an eccentric (11) for driving the piston (5).

6. Brake control system according to one of the preceding claims, **characterized by** a return element (14) for returning the piston (5) into an initial position.

7. Brake control system according to one of the preceding claims, **characterized in that** the pump element (2) conveys fluid simultaneously into the first pressure line (4a) and into the second pressure line (4b).

8. Brake control system according to one of the preceding claims, **characterized in that** a non-return valve (18) is arranged in each case in the first and the second suction line (3a, 3b) and in the first and the second pressure line (4a, 4b).

9. Brake control system according to one of the preceding claims, **characterized in that** the control system comprises an ABS system and/or a TCS system and/or an ESP system and/or an APB system.

## Revendications

1. Système de régulation de freinage pour véhicules, comprenant un premier circuit de freinage (I), un deuxième circuit de freinage (II), à chaque fois au moins un frein de roue (LR, RF, LF, RR) étant disposé dans le premier circuit de freinage (I) et dans le deuxième circuit de freinage (II) et chaque frein de roue étant associé à une soupape d'entrée (EV1, EV2, EV3, EV4) et à une soupape de sortie (AV1, AV2, AV3, AV4), **caractérisé en ce que**
un élément de pompe (2) est précisément prévu, lequel présente un piston étagé (5) qui limite un premier espace de pression (8) et un deuxième espace de pression (9) rendu étanche par rapport à celui-ci,
le premier espace de pression (8) étant connecté au premier circuit de freinage (I) au moyen d'une première conduite d'aspiration (3a) et au moyen d'une première conduite de pression (4a) et le deuxième espace de pression (9) étant connecté au deuxième circuit de freinage (II) au moyen d'une deuxième conduite d'spiration (3b) et au moyen d'une deuxième conduite de pression (4b).

2. Système de régulation de freinage selon la revendication 1, **caractérisé en ce que** le piston (5) présente une première surface de pression (6) pour augmenter la pression dans le premier espace de pression (8) et une deuxième surface de pression (7) pour augmenter la pression dans le deuxième espace de pression (9).

3. Système de régulation de freinage selon la revendication 2, **caractérisé en ce qu'**une dimension de la première surface de pression (6) est égale à une dimension de la deuxième surface de pression (7).

4. Système de régulation de freinage selon l'une quelconque des revendications 1 à 3, **caractérisé en ce qu'**un volume du premier espace de pression (8) est égal à un volume du deuxième espace de pression (9).

5. Système de régulation de freinage selon l'une quelconque des revendications 1 à 4, **caractérisé par** un excentrique (11) pour l'entraînement du piston (5).

6. Système de régulation de freinage selon l'une quelconque des revendications précédentes, **caractérisé par** un élément de rappel (14), pour ramener le piston (5) dans une position de départ.

7. Système de régulation de freinage selon l'une quelconque des revendications précédentes, **caractérisé en ce que** l'élément de pompe (2) refoule du fluide simultanément dans la première conduite de pression (4a) et la deuxième conduite de pression (4b).

8. Système de régulation de freinage selon l'une quelconque des revendications précédentes, **caractérisé en ce qu'**une soupape antiretour (18) est disposée respectivement dans la première et la deuxième conduite d'aspiration (3a, 3b) et la première et la deuxième conduite de pression (4a, 4b).

9. Système de régulation de freinage selon l'une quelconque des revendications précédentes, **caractérisé en ce que** le système de régulation comprend un système en ABS et/ou un système TCS et/ou un système ESP et/ou un système APB.
